(19)

Europäisches Patentamt

European Patent Office

Office européen des brevets

(11) **EP 2 354 840 A1**

(12) **EUROPEAN PATENT APPLICATION**

(43) Date of publication:
**10.08.2011 Bulletin 2011/32**

(51) Int Cl.:
***G02F 1/21*** *(2006.01)*     ***H04N 5/225*** *(2006.01)*
***G02B 5/18*** *(2006.01)*

(21) Application number: **10001230.1**

(22) Date of filing: **05.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **SIEMENS AKTIENGESELLSCHAFT**
**80333 München (DE)**

(72) Inventors:
- **Gilg, Albert**
  **86916 Kaufering (DE)**
- **Wever, Utz**
  **81539 München (DE)**
- **Zhou, Yayun**
  **81735 München (DE)**

(54) **An apparatus and a method for performing a difference measurement of an object image**

(57)     An apparatus and a method for performing a difference measurement of an object image

The invention relates to an apparatus and a method for difference measurement of an object image of an object, said apparatus (1) comprising an optical phase shift masking unit (2) for performing a phase shift of electromagnetical waves originating from said object according to a predetermined mask pattern, an optical superposition unit (3) for superposition of the phase shifted electromagnetical waves provided by said optical phase shift masking unit and a sensor array (4) for detecting intensities of the superpositioned electromagnetical waves provided by said optical superposition unit. The apparatus can be used in any kind of digital camera used in the visible and non-visible frequency range.

FIG 3

**Description**

An apparatus and a method for performing a difference measurement of an object image

The invention relates to an apparatus and a method for performing a difference measurement of an object image of an object and in particular to measure difference intensities of electromagnetical waves such as visual light waves.

A conventional digital camera comprises a sensor array consisting of a plurality of sensor elements, wherein each sensor element can have a photo diode. These photo diodes comprise a limited dynamic range which causes problems for measuring or detecting an object image because of overexposure.

Most conventional hardware based wavelet transforms are carried out using digital circuits wherein the calculation is based on electrons generated by photodiodes. However, the dynamic range of a photo diode is limited. When the photo diode reaches its saturation current, no additional photons can be transformed to electrons. This is the reason which causes an over-exposure problem in generating images.

Accordingly it is an object of the present invention to provide an apparatus and a method for measuring an object image with a high dynamic range.

This object is achieved by an apparatus comprising the features of claim 1.

The invention provides an apparatus for difference measurement of an object image of an object, said apparatus comprising

an optical phase shift masking unit for performing a phase shift of electromagnetical waves originating from said object according to a predetermined mask pattern, an optical superposition unit for superposition of the phase shifted electromagnetical waves provided by said optical phase shift masking unit, and

a sensor array for detecting intensities of the superpositioned electromagnetical waves provided by said optical superposition unit.

The apparatus according to the present invention provides images with a very high dynamic range.

The core idea of the present invention is to subtract light before it reaches a photo diode of the sensor array wherein the optical subtraction is performed by adding phase shifted electromagnetic light waves.

With the apparatus according to the present invention optical waves are subtracted from each other and then a difference measurements of the superposed waves is performed by the sensor array. This allows for a very high dynamic of the measured image.

In an embodiment of the apparatus according to the present invention the optical phase shift masking unit can be formed by a Liquid Cristal masking unit. This Liquid Cristal masking unit can be connected to a control unit which controls Liquid Cristal cells of the Liquid Cristal masking unit by applying voltages to said Liquid Cristal cells depending on a mask pattern.

In a possible embodiment each Liquid Cristal cell of the Liquid Cristal masking unit is switchable between three different cell states to mask the electromagnetical waves.

These cell states can comprise a first state wherein the respective cell is intransparent and blocks electromagnetical waves,

a second state wherein the respective cell is transparent and performs no phase shift of the electromagnetical waves and a third cell state wherein the respective cell is transparent and performs a relative $\pi$-phase shift of the electromagnetical waves.

In a possible embodiment of the apparatus according to the present invention the mask pattern is loaded from a pattern memory of the apparatus.

In another embodiment of the apparatus according to the present invention the mask pattern is loaded via an interface from a database.

In a possible embodiment of the apparatus according to the present invention the optical superposition unit comprises a convex optical lens.

In an embodiment of the apparatus according to the present invention the sensor array comprises a plurality of sensor elements.

Each sensor element can generate an electrical current depending on the intensity of the superpositioned electromagnetic waves falling on the respective sensor element.

In a possible embodiment of the apparatus according to the present invention the sensor array comprises NxN sensor elements corresponding to an NxN image size of the optic image, wherein $N = 2^n$ and n being an integer number.

In a possible embodiment of the apparatus according to the present invention the sensor elements of said sensor array comprise photo diodes.

In a possible embodiment of the apparatus according to the present invention the Liquid Crystal masking unit comprises (NxN)xM, M Liquid Crystal cells to apply in parallel a corresponding mask pattern to the electromagnetical waves for providing dyadic wavelet coefficients of the respective object image, wherein M is the number of image copies, wherein M=NxN or M=31dN or M=3 or M=6.

In a further embodiment of the apparatus according to the present invention the Liquid Crystal masking unit comprises (NxN) Liquid Crystal cells, to apply sequentially a number of 3 mask patterns or 3xld N (NxN) mask patterns to the electromagnetic waves for providing directly dyadic wavelet coefficients of said object image.

In a possible embodiment of the apparatus according to the present invention the apparatus further comprises a multi-image generation unit for generating a multi-image of the object provided to said LC masking unit.

In a possible embodiment of the apparatus according to the present invention the multi-image generation unit comprises a grating for generating a predetermined number of image copies of the object image. The number M of image copies can be M=3 or M=6 or M=31dN or M=NxN, wherein $N=2^n$, n being an integer number.

In a possible embodiment of the apparatus according to the present invention comprises a micro lens array for generating a predetermined number N of image copies of said object image.

In a preferred embodiment of the apparatus according to the present invention the electromagnetical waves are light waves comprising a frequency in a visual frequency band.

In a possible embodiment the electromagnetical waves are formed by non-visible electromagnetical waves such as infrared waves.

The invention further provides a digital camera comprising an apparatus for difference measurement of an object image of an object said apparatus comprising:

(a) an optical phase shift masking unit for performing a phase shift of electromagnetical waves originating from said object according to a predetermined mask pattern;
(b) an optical superposition unit for superposition of the phase shifted electromagnetical waves provided by said optical phase shift masking unit; and
(c) a sensor array for detecting intensities of the superpositioned electromagnetical waves provided by said optical superposition unit.

The invention further provides a method comprising the features of claim 15.

The invention provides a method for performing a difference measurement of an object image of an object comprising the steps:

(a) performing a phase shift of electromagnetic waves originating from the object according to a predetermined mask pattern;
(b) performing an optical superposition of the phase shifted electromagnetic waves; and
(c) detecting intensities of the superposed electromagnetic waves to provide the object image of said object.

In the following possible embodiments of the apparatus and method for difference measurement of an object image of an object are described in more detail with reference to the enclosed figures.

Fig. 1 shows a flowchart for illustrating a possible embodiment of a method for performing a difference measurement of an object image according to the present invention;

Fig. 2 is a diagram for illustrating measurement principle underlying the method for performing a difference measurement of an object image according to the present invention;

Fig. 3 shows a block diagram of a possible embodiment of an apparatus for difference measurement of an object image according to the present invention;

Figs. 4A, 4B show block diagrams of two possible embodiments of an apparatus for difference measurement of an object image using multi-imaging;

Fig. 5 show block diagrams of a further possible embodiment of an apparatus for difference measurement of an object image without multi-imaging;

Fig. 6 shows an example for a mask arrangement and a corresponding sensor array as employed by the apparatus and method for difference measurement of an object image according to an embodiment;

Figs. 7A, 7B, show a mask arrangement and a corresponding sensor array as employed by the apparatus and method for difference measurement of an object image according to further embodiments;

Figs. 8A, 8B, show a mask arrangement and a corresponding sensor array as employed by the apparatus and method for difference measurement of an object image according to further embodiments;

Fig. 9          shows a diagram for illustrating a possible sensor arrangement as employed in possible embodiment of the present invention;

Fig. 10         shows a mask arrangement and a corresponding sensor array as employed by the apparatus and method for difference measurement of an object image according to a further embodiment.

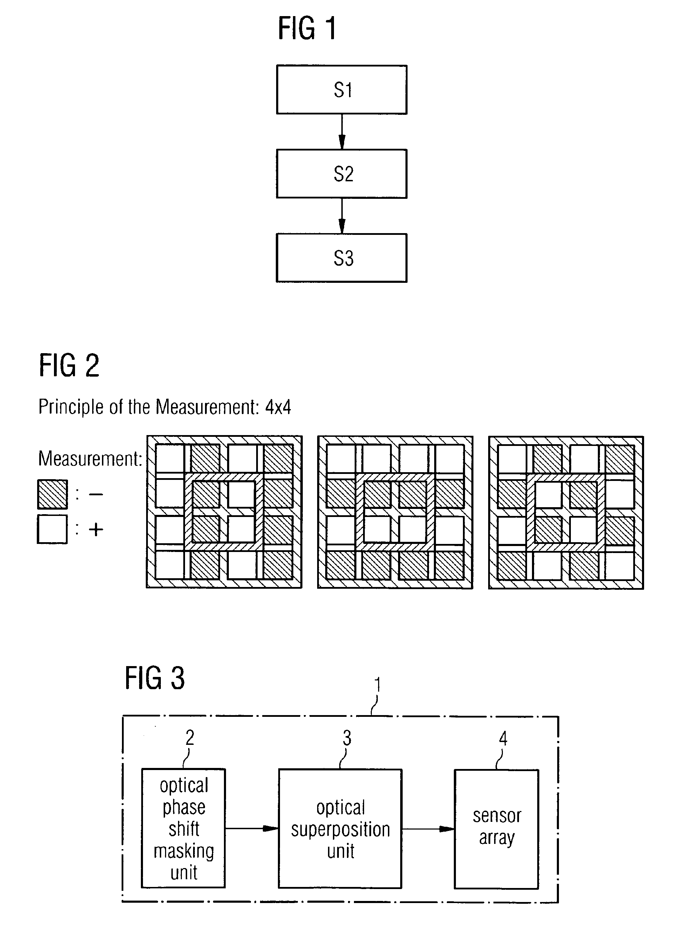

As can be seen from Fig. 1 a method for performing a difference measurement of an object image of an object according to the present invention comprises basically three steps S1, S2, S3.

In a first step S1 a phase shift of electromagnetic waves originating from the object according to a predetermined mask pattern is performed. The electromagnetical waves can be optical visible waves, i.e. light waves.

In a further step S2 an optical superposition of the phase shifted electromagnetic waves is performed. The phase shifted electromagnetic waves can comprise a phase difference of $\pi$, i.e. 180 degrees and the optical superposition causes that phase shifted electromagnetic waves are subtracted from not phase-shifted electromagnetic waves. Accordingly with a phase shift of $\pi$ the superposition of the electromagnetic waves causes that light waves are subtracted from other light waves, i.e. an optical subtraction is performed. Accordingly only the superpositioned electromagnetic waves, i.e. the difference light is provided to a following sensor array.

In a further step S3 intensities of the superposed electromagnetic waves are detected to provide an object image of the object. The detection of the intensities is performed by a sensor array comprising a plurality of sensor elements each having for instance a photo diode. These sensor elements detect the intensities of the subtracted light waves.

Fig. 2 shows a diagram for illustrating a measurement principle underlying the present invention. Different mask patterns can be applied to the optical waves. By use of the optical phase shift masking unit the detected intensities can then be assembled within the sensor array for providing for instance dyadic wavelet coefficients of the object image which can be further processed by a processing unit.

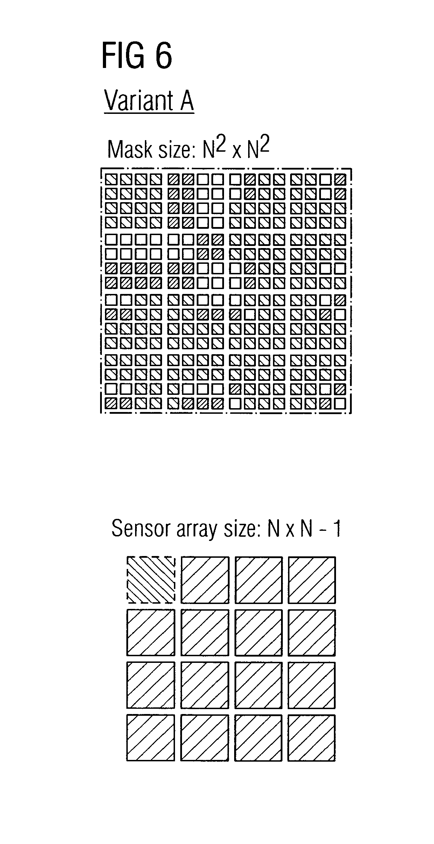

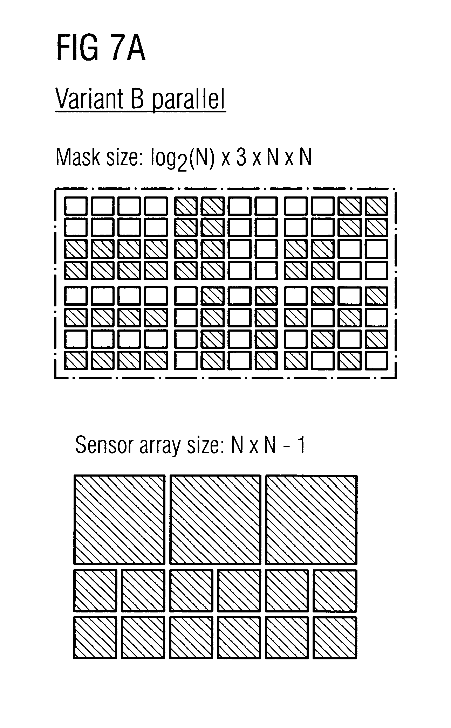

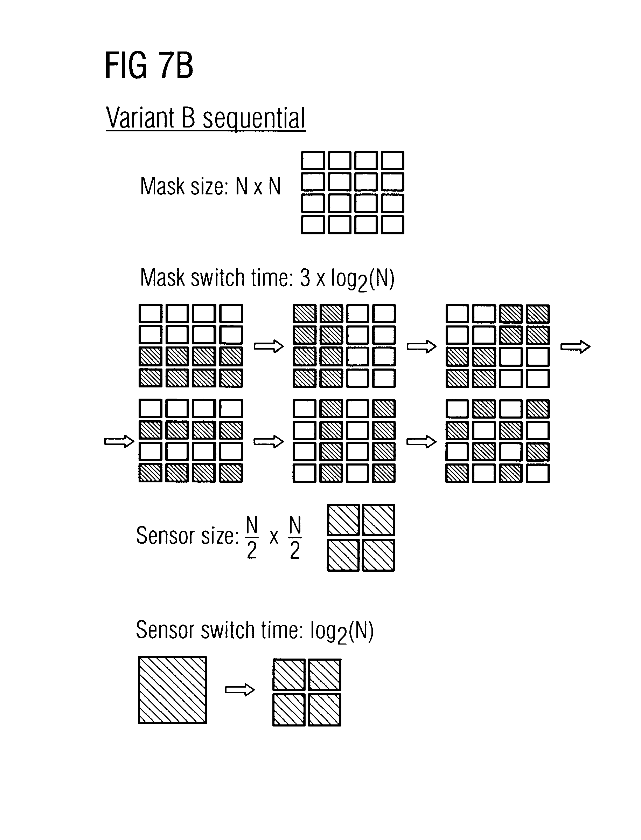

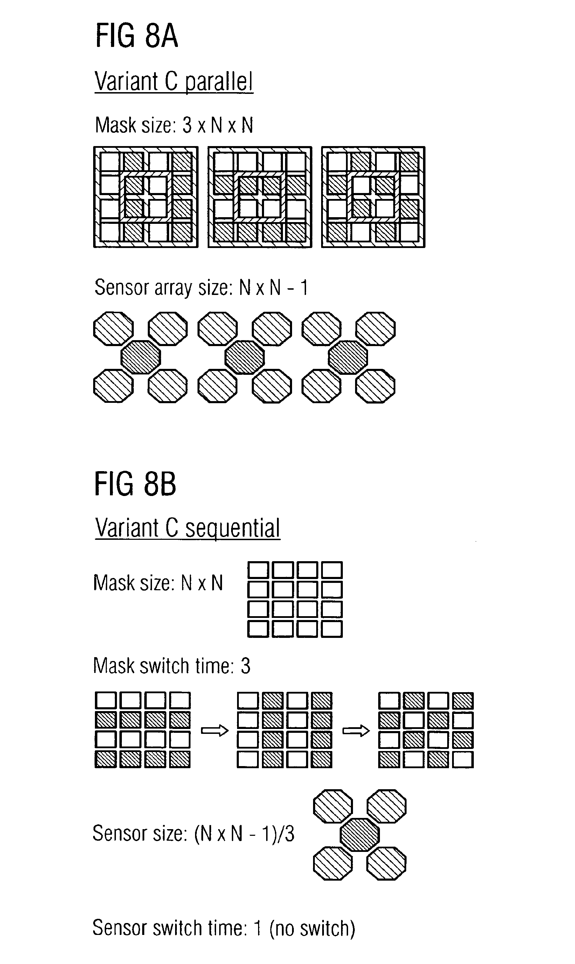

Fig. 3 shows a block diagram of a possible embodiment of an apparatus 1 according to the present invention for difference measurement of an object image of an object. The apparatus 1 comprises an optical phase shift masking unit 2 for performing a phase shift of electromagnetic waves originating from the object according to a predetermined mask pattern. The optical phase shift masking unit 2 can in a possible embodiment be formed by a Liquid Crystal masking unit connected to a control unit which controls Liquid Crystal cells of the Liquid Crystal masking unit 2 by applying voltages to the LC cells depending on a mask pattern loaded from a memory. This mask pattern can be stored in a pattern memory or loaded via an interface from a database. In a possible embodiment each LC cell of the LC cell masking unit 2 is switchable in response to control signals provided by the control unit between different cell states to mask the electromagnetic waves falling on the LC masking unit 2. In a possible embodiment as shown in figure 6 each cell of the LC masking unit 2 can have three different cell states. In a first cell state the respective cell is intransparent and blocks the electromagnetic waves. In a second state the respective cell is transparent and performs no phase shift of the incoming electromagnetic waves. In a third cell state the respective cell is transparent and performs a phase shift of $\Pi$ of the incoming electromagnetic waves. In other embodiments as shown in figures 7A, 7B, 8A, 8B the cells comprise only two different cell states, i.e. only the second and third cell state and not the intransparent first cell state.

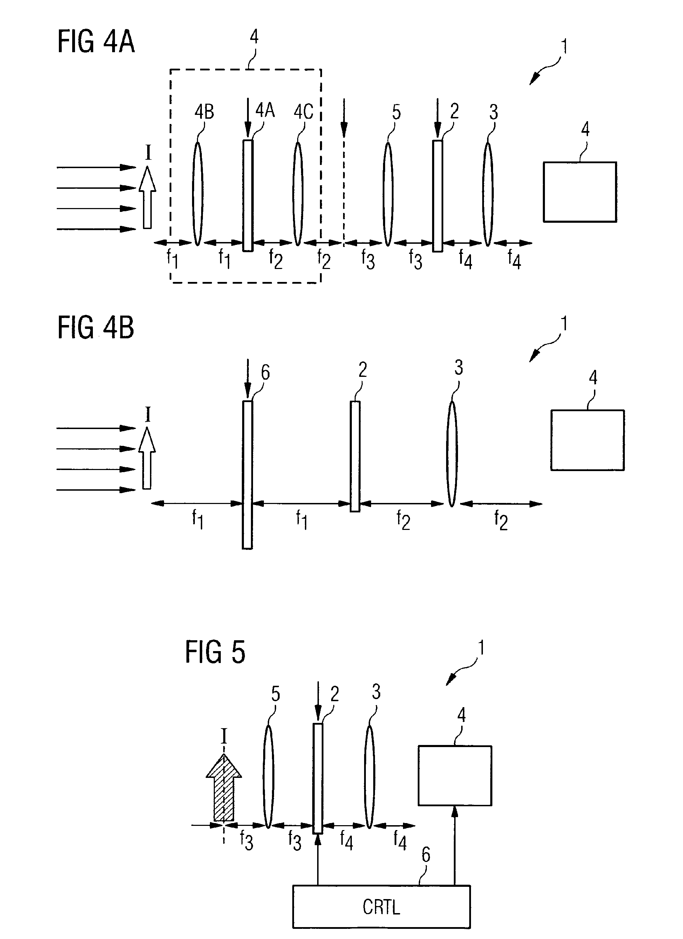

The apparatus 1 according to the present invention further comprises an optical superposition unit 2 for superposition of the phase shifted electromagnetic waves provided by the optical phase shift masking unit 2. This optical superposition unit 3 can be formed in possible embodiments by a convex optical lens such as lens 3 shown in figures 4A, 4B, 5. The optical superposition unit 3 generates a difference light falling on the sensor array 4 of the apparatus 1. The sensor array 4 detects the intensities I of the superpositioned electromagnetic waves provided by the optical superposition unit 3. The sensor array 4 comprises a plurality of sensor elements and each sensor element can include at least one photo diode. Each sensor element generates an electrical current depending on the intensity of the superpositioned electromagnetic waves falling on the respective sensor element. In possible embodiments as shown in figures 7B, 8B the mask array comprises (NxN) cells corresponding to an NxN image size of the optical image, wherein $N = 2^n$ and n being an integer number. In one embodiment as shown in figure 6 the Liquid Crystal masking unit 2 comprises $(N^2 \times N^2)$ cells to apply a $(N^2 \times N^2)$ mask pattern to the electromagnetical waves for providing directly dyadic wavelet coefficients of the object image.

In the embodiments as shown in figures 7B, 8B the Liquid Crystal masking unit 2 comprises (NxN) LC cells and the LC masking unit 2 is switched by a switch control unit 6 to apply sequentially a number of $3 \times \log_2(N)$ (NxN) mask patterns (figure 7B) or 3 (NxN) mask patterns (figure 8B) to the electromagnetic waves for providing directly dyadic wavelet coefficients of said object image.

In further embodiments of the apparatus 1 according to the present invention as shown in figures 4A, 4B the apparatus 1 comprises a multi-image generation unit which generates a multi-image of the object, wherein this multi-image is provided to the LC masking unit 2. This multi-image generation unit can comprise in a possible embodiment as shown in figure 4A a grating 4A for generating a predetermined number M of image copies of the respective object image. The multi-image generation unit can also be formed by a microlens array 6 as shown in the embodiment of figure 4B.

In a possible embodiment each generated image copy generated for example by the grating 4A is masked by a corresponding Liquid Crystal masking unit 2 which comprises (NxN) LC cells to apply a (NxN) masking pattern to the electromagnetical waves of the generated image copy.

In a another embodiment the generated image copies provided by said grating 4A are masked by a common LC masking unit which comprises ($N^2$x$N^2$) LC cells to apply a ($N^2$x$N^2$) mask pattern to the electromagnetic waves of the generated image copies. The apparatus 1 according to the present invention as shown in Fig. 3 can be integrated into a digital camera. The sensor array 4 can be connected to a processing unit performing an image processing such as compression or noise reduction. The apparatus 1 as shown in Fig. 3 can be used in other devices as well such as tomograph or within a satellite such as a weather forecast satellite. The frequency f of the measured electromagnetic waves can vary. In a possible embodiment the electromagnetic waves are light waves having a frequency in a visual frequency band. The frequency of electromagnetic waves can also be in other frequency bands such as infrared light.

The optical phase shift masking unit 2 performs a phase shift for preparation of a subtraction of light performed by the optical superposition unit 3.

The principle of light subtraction can be described with reference to the following equations:

$$(1) \quad \Psi_1 = A_1 \cos(\phi 1 - \omega t)$$
$$\Psi_2 = A_2 \cos(\phi 2 - \omega t) \quad \rightarrow \quad \Psi = \Psi_1 + \Psi_2 = A\cos(\phi - \omega t)$$

$$(2) \quad A = \sqrt{A_1^2 + A_2^2 + 2A_1 A_2 \cos(\phi 1 - \phi 2)}$$

$$(3) \quad \tan\phi = \frac{(A_1 \cos\phi_1 + A_2 \cos\phi 2)}{A_1 \sin\phi_1 + A_2 \sin\phi 2)}$$

$$(4) \quad \phi 1 - \phi 2 = (2m+1)\cdot \Pi \qquad \text{(subtraction of light)}$$

$$(5) \quad \phi 1 - \phi 2 = 2m \cdot \Pi \qquad \text{(addition of light)}$$

As can be seen from equation (4) a phase shift of $\Pi$ causes a light subtraction. The phase shift of light through a LC cell can be calculated as follows:

$$\text{Phase shift} = \frac{2\Pi}{\lambda}\left(\int_0^d \frac{n_e n_o}{\sqrt{n_i^2 \sin^2\theta(X,V) + n_0^2 \cos^2\theta(X,V)}}dX - n_o d\right)^* \qquad (6)$$

wherein V is the voltage applied to the cell and $\lambda$ is the wavelength of the electromagnetic wave,
no is an ordinary reflective index of the liquid crystal

(LC),

$n_i$ is an extra ordinary reflective index of the liquid crystal (LC),

θ (X,V) is the tilt angle of LC molecules,

V is the applied voltage and

d is the thickness of a LC cell.

Fig. 4A shows a diagram for illustrating the structure of a possible embodiment of an apparatus 1 for difference measuring of an object image of an object according to the present invention. In this embodiment the apparatus 1 for difference measurement of an object image of an object comprises an LC phase shift masking unit 2, a convex lens 3 forming the optical superposition unit and the sensor array 4 for detecting the intensities of the superpositioned electromagnetic waves provided by the convex lens 3. In the shown embodiment the image originating from an object is provided to a multi-image generation unit 4 which generates a multi-image of the object. The multi-image generation unit 4 comprises in the shown embodiment of figure 4A a grating 4A which generates a predetermined number of image copies of the object image I. The multi-image generation unit 4 further comprises a first lens 4B and a second lens 4C. In a possible embodiment the grating 4A is formed by a two-dimensional grating generating a multi-image according to the following equation:

$$g(u,v) \; = \; \sum_{m=+1}^{P} \sum_{n=+1}^{Q} \delta(u - m\Delta u)\delta(v - n\Delta v) \qquad (7)$$

wherein PxQ is the number of multi-images or image-copies: M=PxQ,

wherein u, v are coordinates of the image,

m, n are indices of the copies, and

Δ u, Δv are distances of the image centre of neighbouring copies.

The generated multi-image is supplied via a lens 5 to the LC masking unit 2 as shown in Fig. 4. The multi image allows a one time measurement without switching using the mask and sensor arrangements as shown e.g. in figures 6, 7A, 8A, 10.

Fig. 6 shows a possible embodiment of a Liquid Crystal mask used by the LC masking unit 2 for a wavelet transform and a corresponding sensor array. The shown LC mask arrangement comprises ($N^2$x$N^2$) LC cells for an image size of (NxN) sensor elements. In the shown embodiment N=4=$2^n$, n=2. As can be seen from Fig. 6 the LC mask comprises the plurality of LC cells wherein each LC cell of the LC masking unit 2 is switchable between three different cell states to mask the electromagnetic waves. The optical phase shift masking unit 2 can be connected to a control unit which controls each LC cell of the LC masking unit 2 by applying voltages to the LC cells depending on a stored mask pattern. In the embodiment of Fig. 6 each LC cell can be switched between three different cell states. The LC cells of Fig. 6 shown in grey are switched to a first cell state where the respective LC cell is intransparent and blocks the elektromagnetic waves falling on the respective LC cell. The LC cells shown in white in Fig. 6 are in a second cell state and transparent and perform a constant phase shift of the electromagnetic waves falling on the respective LC cell. The LC cells shown in black in Fig. 6 are in a third cell state where the respective cell is transparent and performs a relative π-phase shift of the electromagnetically waves with respect to the cells in the second cell state. The LC mask shown in Fig. 6 is a specific LC mask providing for dyadic wavelet coefficients in the sensor array. The LC mask shown in Fig. 6 comprises 16x16 LC cells and can be used for a sensor array 4 comprising 4x4 sensor elements generating a 4x4 object image. The arrangement shown in Fig. 6 has the advantage that a real time measurement at the speed of light can be performed. Further differences can be recorded directly by providing wavelet coefficients which can be processed immediately by a following processing unit. By measuring differences the dynamic range of the captured image is increased. The arrangement has the further advantage that no switch control circuit is necessary and the object image can be measured with one single measurement. The LC cells of the LC masking unit 2 can be switched before the measurement to the different cell states as shown in Fig. 6 and then for performing the object measurement no additional switching is necessary. The arrangements shown in Fig. 4A, 4B do not need to perform a switching between the LC mask and have therefore a comparatively simple structure without a switching control.

Fig. 5 shows a further possible embodiment of an apparatus 1 according to the present invention. In this embodiment no multi image is generated but the LC masking unit 2 is switched by a switch control 6 between different LC mask patterns having a size of NxN as shown in the mask embodiments of figures 7B, 8B. The switch control 6 further controls the sensor array 4. The LC masking unit 2 as shown in figure 4B is switched 3x$\log_2$(N) times between different LC masks as shown in figure 7B. In this shown example of N=4 six different LC mask patterns are applied sequentially under the control of the switching control unit 6. The size of the sensor array 4 comprises in the shown embodiment of figure $7\text{B}$ $\dfrac{N}{2} X \dfrac{N}{2}$ sensor elements. For N=4 the sensor array 4 comprises four sensor elements as shown in figure 7B.

In the embodiment shown in figure 8B the mask size of the LC mask provided by the LC masking unit 2 is also NxN. In the embodiment shown in figure 8B the LC mask patterns are applied sequentially to the LC masking unit 2 under the control of the switching control circuit 6. The size of the sensor array 4 comprises in the embodiment of figure 8B (NxN-1):3 sensor elements. In the given example of N=4 the number of sensor elements in this specific example is 5 as shown in figure 8B.

In the mask and sensor array embodiments shown in figures 7B, 8B using the arrangement shown in Fig. 5 a sequential measurement is performed by applying sequentially different LC masks in a sequential order under control of a switching control unit 6 as shown in figure 5. In the embodiment shown in figure 7B the sensor array 4 is also switched. In the embodiment shown in figure 7B the wavelet coefficients are measured directly and no light exposure is lost.

In the mask and sensor array embodiment shown in figure 8B also several LC mask patterns are applied sequentially but the number of necessary LC mask patterns is lower than in the embodiment shown in figure 7B. Furthermore, no switching of the sensor array 4 is necessary in the embodiment of figure 8B. In the embodiment of figure 8B the wavelet coefficients are not measured directly but they are convertible.

The LC mask pattern and the corresponding sensor array 4 shown in the embodiment of figure 6 allows also a one-time measurement without switching to measure directly the wavelet coefficients. However, a longer exposure time due to the highly intransparent LC-mask is necessary. With the embodiments of the LC mask and the sensor array as shown in figures 7A, 8A also a one-time measurement without switching is possible. The embodiment shown in figure 8A employs a regular sensor array whereas the sensor array shown in figure 7A is not regular. Furthermore, the mask array of the embodiment shown in figure 8A is smaller than the mask array shown in figure 7A. However, an advantage of the embodiment of figure 7A with respect to the embodiment shown in figure 8A resides in that the wavelet coefficients can be measured directly and no exposure is lost. The number of sensor elements in the sensor array 4 is equal in both embodiments of figures 7A, 8A, i.e. NxN-1 sensor elements. The mask size of the LC mask in the embodiment of figure 7A is bigger than the LC-mask size of the embodiment shown in figure 8A. The mask size, i.e. the number of LC cells in the embodiment of figure 7A is: $\log_2(N)x3xNxN$ whereas the mask size of the LC mask in figure 8A is 3xNxN.

The embodiments shown in figures 4A, 4B have the advantage that they do not need a switching control circuit 6 such as the embodiment of figure 5, however, when employing a switch control circuit 6 as in the embodiment shown in figure 5 it is possible to use LC masks with less LC cells i.e. smaller LC-masks. In contrast image measurements without switching of LC-masks such as performed by the embodiments of Fig. 4A, 4B can be performed faster than with switching of LC-masks.

In the embodiment of figure 4B a microlens array 6 is provided for generating a multi image allowing a parallel measurement without mask switching. Figs. 7A, 8A show possible corresponding LC mask arrangements for the LC masking unit 2 and the sensor array 4 for the embodiments shown in Fig. 4A, 4B. Figs. 7A, 8A show corresponding sensor arrangements of sensor elements within the sensor array 4 for the embodiments shown in Figs. 4A, 4B using the LC mask arrangements of Figs. 7A, 8A. In the embodiment shown in Fig. 4A, 4B the LC mask arrangement and the sensor array arrangement as shown in Figs. 7A, 8A allow a real time measurement and a direct recording of differences in form of wavelet coefficients. Both embodiments also provide for a one time measurement and increase the dynamic range of the captured image I. The advantage of the embodiments shown in Fig. 4A, 4B using a LC mask shown either in Fig. 7A or in Fig. 8A with respect to the embodiment shown in Fig. 6 resides in that the mask area of the LC mask is smaller to that the number of LC cells to be controlled is lower. Further, only two cell states, i.e. a transparent state without additional phase shift and a transparent state with an additional phase shift of $\pi$ have to be provided.

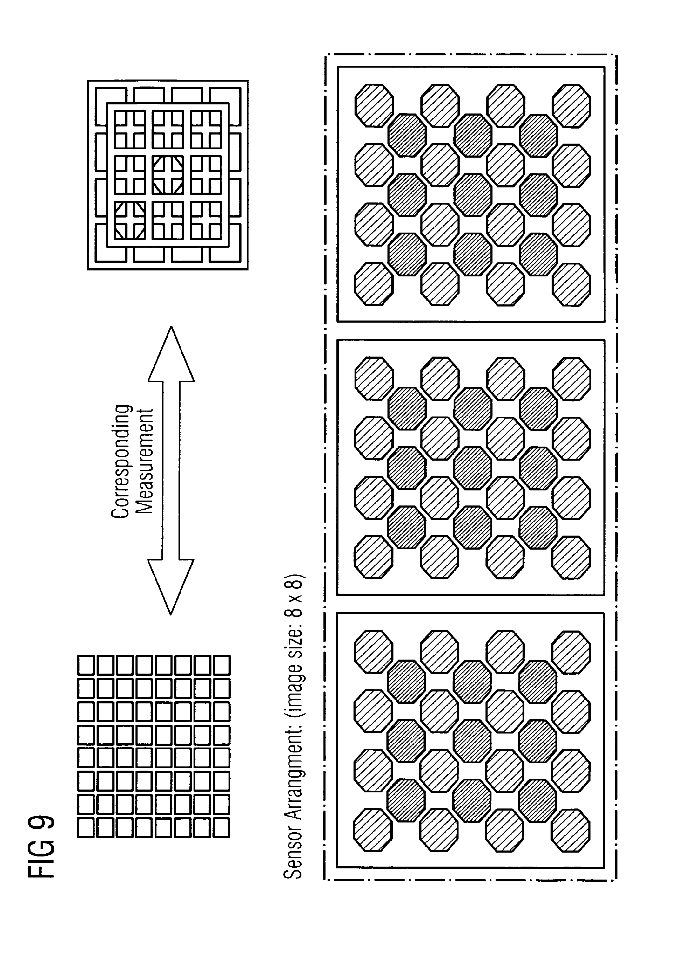

Fig. 9 shows a possible embodiment of a sensor arrangement for an image size of 8x8. As can be seen the sensor elements are formed by octangular photo diodes. As can be seen in Fig. 9 between the necessary 8x8 sensor elements redundant sensor elements are provided which are optional and can be used for furthers function such as noise reduction. This allows for a flexible image measurement with further image processing functions. The additional information data provided by the redundant sensor cells can e.g. used for noise reduction.

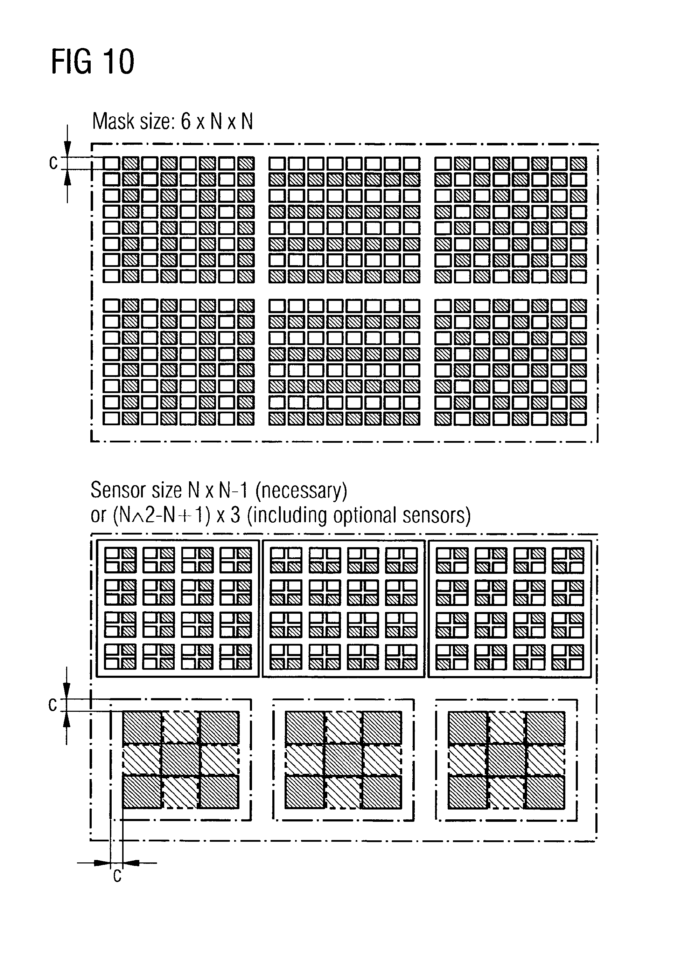

Fig. 10 shows further exemplary embodiment of a LC mask arrangement and a corresponding sensor arrangement. In this embodiment the mask size comprises 6• (NxN) LC cells and the sensor size of the sensor array with NxN-1 necessary sensor elements or $(0,5N^2-N+1)$ • 3 sensor elements if optional sensors are included. The LC mask and sensor arrangement as shown in Fig. 10 allows a one time measurement with a regular sensor array. When compared to the embodiment shown in Fig. 8A the mask size of the LC mask is doubled but no overlap is necessary.

As can be seen in Fig. 10 in the given example the sensor array comprises a first group of three 4x4 sensor elements and a second group of three 3x3 sensor elements. The 3x3 sensor elements arrays are dislocated with respect to the 4x4 sensor element arrays by a predetermined distance corresponding to a cell size c of a single LC cell in the LC masking unit, thus providing additional information data to avoid overlap.

With the method and apparatus 1 according to the present invention an overexposure of the image due to the limited dynamic range of a photo diode can be avoided. The apparatus 1 and method according to the present invention subtracts light before it reaches the photo diode and uses the principle of optical subtraction by phase shifting light via a predetermined phase difference of e.g. $\pi$.

In a possible embodiment wavelet coefficients are directly generated for further processing. The apparatus and system according to the present invention can comprise a multi image generation unit 4, 6 followed by means for optical correlation depending on a phase shift mask generated in response to a template control unit.

The wavelet image measurement scheme according to the present invention has been developed based on Haar wavelet oversampling. It is equivalent to the dyadic Haar wavelet decomposition, but has a simpler pattern for hardware implementation. This measurement scheme records the difference of neighboring pixels, which is independent of illumination conditions. It truly captures the ratio between the various features of an object. The difference is generally much smaller than the original pixel value, hence less bits are required after quantization, reducing the throughout significantly. Furthermore, the parallelism of imaging architecture guarantees a real-time processing property. If redundant oversampling is performed, also higher wavelet (e.g. Daubechies 4) can be constructed from the from the difference measurements.

**Claims**

1. An apparatus for difference measurement of an object image of an object, said apparatus (1) comprising:

   (a) an optical phase shift masking unit (2) for performing a phase shift of electromagnetic waves originating from said object according to a predetermined mask pattern;
   (b) an optical superposition unit (3) for superposition of the phase shifted electromagnetic waves provided by said optical phase shift masking unit; and
   (c) a sensor array (4) for detecting intensities of the superpositioned electromagnetic waves provided by said optical superposition unit.

2. The apparatus according to claim 1, wherein said optical phase shift masking unit (2) is a Liquid Cristal (LC) masking unit (2) connected to a control unit which controls LC cells of said LC masking unit by applying voltages to said LC cells depending on said mask pattern.

3. The apparatus according to claim 2, wherein each LC cell of said LC masking unit (2) is switchable between three cell states to mask the electromagnetic waves, said cell states comprising:

   - a first state wherein the respective cell is intransparent and blocks electromagnetic waves;
   - a second state wherein the respective cell is transparent and performs no phase shift of the electromagnetic waves and
   - a third cell state wherein the respective cell is transparent and performs a $\pi$-phase shift of the electromagnetic waves.

4. The apparatus according to claims 1-3, wherein said mask pattern is loaded from a pattern memory of said apparatus (1) or loaded via an interface from a database.

5. The apparatus according to claims 1-4, wherein said optical superposition unit (3) comprises a convex optical lens.

6. The apparatus according to claims 1-5, wherein said sensor array (4) comprises a plurality of sensor elements, wherein each sensor element generates an electrical current depending on the intensity of the superpositioned electromagnetic waves falling on the respective sensor element.

7. The apparatus according to claim 6,

wherein said sensor array (4) comprises NxN sensor elements corresponding to an NxN image size of said optical image, wherein $N=2^n$, n is an integer number.

8.   The apparatus according to claims 6, 7,
     wherein said sensor elements of said sensor array (4) comprise photo diodes.

9.   The apparatus according to claims 2-8,
     wherein said Liquid Crystal (LC) masking unit (2) comprises (NxN)-M LC cells to apply in parallel a corresponding mask pattern to said electromagnetic waves for providing dyadic wavelet coefficients of said object image,
     wherein $N=2^n$, n being an integer number,
     wherein M=NxN or M=31dN or M=3 or M=6,
     wherein M is the number of image copies.

10.  The apparatus according to claims 2-8,
     wherein said Liquid Crystal (LC) masking unit (2) comprises (NxN) LC cells to apply sequentially a number of 31dN (NxN) mask patterns or 3(NxN) mask patterns to said electromagnetic waves for providing directly dyadic wavelet coefficients of said object image, wherein $N=2^n$, n being an integer number.

11.  The apparatus according to claims 1-8,
     wherein said apparatus (1) further comprises a multi-image generation unit (4; 6) for generating a multi-image of said object provided to said LC masking unit (2).

12.  The apparatus according to claim 11,
     wherein said multi-image generation unit (4; 6) comprises a grating (4A) or a microlens array (6) for generating a predetermined number (M) of image copies of said object image.

13.  The apparatus according to claims 1-12,
     wherein the electromagnetic waves are light waves having a frequency in a visual frequency band.

14.  A camera comprising an apparatus (1) according to claims 1-13.

15.  A method for performing a difference measurement of an object image of an object comprising the steps of:

     (a) performing (S1) a phase shift of electromagnetic waves originating from the object according to a predetermined mask pattern;
     (b) performing (S2) an optical superposition of the phase shifted electromagnetic waves; and
     (c) detecting (S3) intensities of the superposed electromagnetic waves to provide the object image of said object.

# FIG 1

S1

S2

S3

# FIG 2

Principle of the Measurement: 4x4

Measurement:

▨ : −

☐ : +

# FIG 3

1

| 2 | 3 | 4 |

optical phase shift masking unit → optical superposition unit → sensor array

FIG 4A

FIG 4B

FIG 5

CRTL

# FIG 6

## Variant A

Mask size: $N^2 \times N^2$

Sensor array size: $N \times N - 1$

# FIG 7A

## Variant B parallel

Mask size: $\log_2(N) \times 3 \times N \times N$

Sensor array size: $N \times N - 1$

# FIG 7B

## Variant B sequential

Mask size: N x N

Mask switch time: 3 x log$_2$(N)

Sensor size: $\frac{N}{2}$ x $\frac{N}{2}$

Sensor switch time: log$_2$(N)

# FIG 8A

## Variant C parallel

Mask size: 3 x N x N

Sensor array size: N x N - 1

# FIG 8B

## Variant C sequential

Mask size: N x N

Mask switch time: 3

Sensor size: (N x N - 1)/3

Sensor switch time: 1 (no switch)

# FIG 9

Corresponding Measurement

Sensor Arrangment: (image size: 8 x 8)

# FIG 10

Mask size: 6 x N x N

Sensor size N x N-1 (necessary)
or (N∧2-N+1) x 3 (including optional sensors)

EP 2 354 840 A1

Europäisches
Patentamt

European
Patent Office

Office européen
des brevets

# EUROPEAN SEARCH REPORT

Application Number

EP 10 00 1230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/228005 A1 (DOWSKI EDWARD RAYMOND [US] DOWSKI JR EDWARD RAYMOND [US]) 18 November 2004 (2004-11-18) <br> * paragraph [0032] * <br> * paragraph [0033]; figure 1 * <br> * paragraph [0012] * <br> * paragraph [0065] * | 1,5-8, 13-15 | INV. <br> G02F1/21 <br> H04N5/225 <br> G02B5/18 |
| X | US 6 778 683 B1 (BONNER BRETT BRACEWELL [US] ET AL) 17 August 2004 (2004-08-17) <br> * paragraph [0039]; figure 5 * | 1,5-8, 13-15 | |
| X | US 2009/020714 A1 (SLINGER CHRISTOPHER WILLIAM [GB]) 22 January 2009 (2009-01-22) <br> * paragraph [0042]; figure 1 * <br> * paragraph [0043] * <br> * paragraph [0026] * <br> * paragraph [0044] * <br> * paragraph [0065]; figure 2a * <br> * paragraph [0059] * | 1-10, 13-15 | |
| X | WO 98/46007 A1 (COMMW SCIENT IND RES ORG [AU]; BONE DONALD JAMES [AU]) 15 October 1998 (1998-10-15) | 1,14,15 | TECHNICAL FIELDS SEARCHED (IPC) <br> G02F <br> H04N <br> G02B |
| A | * p. 8 - 11, section "Masking"; page 11; claims 1,2 * | 10 | |
| X | US 2006/157640 A1 (PERLMAN STEPHEN G [US] ET AL) 20 July 2006 (2006-07-20) | 1,14,15 | |
| A | * paragraph [0092] * <br> * paragraph [0094] - paragraph [0098] * | 9 | |

The present search report has been drawn up for all claims

| Place of search | Date of completion of the search | Examiner |
|---|---|---|
| Munich | 30 June 2010 | Thieme, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-10, 13-15

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

```
1. claims: 1, 5-8, 13-15

        Difference measurement of an object image.
        Special technical feature: Optical phase shift unit and
        optical superimposition unit
        Solved problem: Allow for an evaluation of the phase of an
        electromagnetic wave
        Effect: An image is projected on the sensor array that is
        determined by the phase property of the superimposed
        electromagnetic waves
                        ---

2. claims: 2-4, 9, 10

        Difference measurement of an object image.
        Special technical feature: Liquid crystal unit is used for
        phase masking
        Solved problem: Allow for applying a plurality of different
        phase masks
        Effect: The optical properties of the phase mask are changed
        by applying  voltages
                        ---

3. claims: 11, 12

        Difference measurement of an object image.
        Special technical feature: Multi image generation
        Solved problem: Speed up of the image capturing process
        Effect: A plurality of phase masks are applied
        simultaneously to a plurality of image copies
                        ---
```

# EP 2 354 840 A1

## ANNEX TO THE EUROPEAN SEARCH REPORT
## ON EUROPEAN PATENT APPLICATION NO.

EP 10 00 1230

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2010

| Patent document cited in search report | | Publication date | Patent family member(s) | | Publication date |
|---|---|---|---|---|---|
| US 2004228005 | A1 | 18-11-2004 | US | 2007127041 A1 | 07-06-2007 |
| US 6778683 | B1 | 17-08-2004 | TW | 238001 B | 11-08-2005 |
| | | | TW | 249693 B | 21-02-2006 |
| | | | US | 2004165748 A1 | 26-08-2004 |
| | | | US | 2004175038 A1 | 09-09-2004 |
| US 2009020714 | A1 | 22-01-2009 | AU | 2007213487 A1 | 16-08-2007 |
| | | | CA | 2641067 A1 | 16-08-2007 |
| | | | EP | 1982227 A1 | 22-10-2008 |
| | | | WO | 2007091051 A1 | 16-08-2007 |
| | | | JP | 2009529160 T | 13-08-2009 |
| WO 9846007 | A1 | 15-10-1998 | NONE | | |
| US 2006157640 | A1 | 20-07-2006 | US | 2008001069 A1 | 03-01-2008 |

EPO FORM P0459

For more details about this annex : see Official Journal of the European Patent Office, No. 12/82

21